# EUROPEAN PATENT SPECIFICATION

(11) **EP 3 571 915 B1**
(45) Date of publication and mention of the grant of the patent: **30.06.2021**
(21) Application number: 19175524.8
(22) Date of filing: 21.05.2019
(51) Int. Cl.: A01D 34/00, A01D 75/20

(54) **LAWN MOWER ROBOT**
RASENMÄHROBOTER
ROBOT POUR TONDRE LE GAZON

(30) Priority: 21.05.2018 IT 201800005552
(43) Date of publication of application: 27.11.2019
(73) Proprietor: Bernini, Fabrizio, 52021 Bucine - Arezzo (IT)
(72) Inventor: Bernini, Fabrizio, 52021 Bucine - Arezzo (IT)
(74) Representative: Milli, Simone

(56) References cited:
- EP-A1- 2 939 513
- US-A1- 2016 062 345
- US-A1- 2018 077 860

## Description

This invention relates to the field of machine tools for gardening.

In particular, the invention relates to a system for controlling the trajectory and the execution of the grass cutting operations of an autonomous lawn mower robot with particular attention to the aspects relating to the use of the device in safe conditions.

The lawn mower devices are used to keep lawns, gardens and grassy areas in general in optimum conditions, that is to say, for keeping the grass below a certain height in a substantially homogeneous manner over the entire cutting area.

The cutting area may be, for example, delimited by a perimeter wire or defined by other techniques known in the sector in such a way as to guarantee that the lawn mower robot moves solely inside it. There are various cutting methods which the lawn mower robot may use to carry out its work, in particular with regards to the control of the route to be followed. For example, the robot might move along a random route, that is, moving in a straight line and changing direction every time it encounters an obstacle or the perimeter string which delimits the working area.

In this context, the prior art lawn mower robots are therefore able to manage autonomously the presence of fixed obstacles inside the cutting area in which they operate.

On the contrary, the presence of mobile or potentially mobile obstacles, such as, for example, animals and people, is currently a problem for control of the trajectory, which lawn mower robots are not able to deal in an efficient and, above all, safe manner.

An example of a similar lawn mower robot can be found in the application US 2018/077860 A1, however in this earlier document it is difficult to detect the distance between the robot device and a moving obstacle and, furthermore, it is impossible to warn the latter.

In this context, the technical purpose which forms the basis of this invention is to provide a lawn mower robot which overcomes at least some of the above-mentioned drawbacks of the prior art.

In particular, the aim of the invention is to provide a lawn mower robot which is able to guarantee an optimum control of the trajectory and the execution of the grass cutting operations, in complete safety also, and in particular, in the presence of mobile or potentially mobile obstacles.

The technical purpose indicated and the aims specified are substantially achieved by a lawn mower robot comprising the technical features described in one or more of the appended claims.

The invention describes an autonomous lawn mower robot comprising motor means designed to allow the movement of the robot in a substantially automatic manner along a cutting trajectory and means for cutting the grass.

The robot also comprises an antenna configured to receive wireless signals from at least one personal wireless device which can be coupled with the antenna and a control unit configured to determine a relative distance of the at least one personal wireless device with respect to the lawn mower robot by means of the information contained in the wireless signals received from the antenna and to determine the cutting trajectory and activate/deactivate the cutting means as a function of the relative distance detected.

Another aim of the invention is an increased safety cutting system which comprises an autonomous lawn mower robot according to the invention and at least one personal wireless device configured to receive and transmit wireless signals from and to the antenna of the lawn mower robot. Advantageously, the lawn mower robot and the system according to the invention make it possible to guarantee the execution of the grass cutting operations in conditions of total safety both for the robot, in order to guarantee the longest possible useful life, and for any potentially mobile obstacles, such as animals and persons, which transit inside the cutting area.

Further features and advantages of this invention are more apparent in the detailed description below, with reference to a preferred, non-restricting, embodiment of a lawn mower robot as illustrated in the accompanying drawings, in which:
- Figure 1 schematically shows a lawn mower robot in which are denoted the features according to this invention;
- Figures 2a and 2b show a possible operating situation of the lawn mower robot according to the invention.

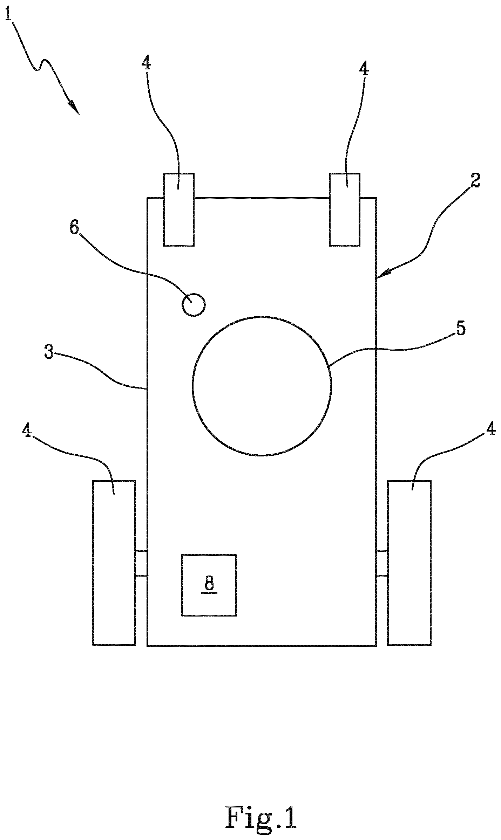

Figure 1 generically denotes a lawn mower robot with reference numeral 1.

The robot 1 is in particular a robot 1 of the type designed to perform successive operations for cutting the grass which is inside a cutting area "A" predetermined, for example, by means of a perimeter wire or other techniques/technologies known in the sector.

The robot 1 according to the invention comprises motor means 2 designed to allow the movement of the robot in a substantially automatic manner along a cutting trajectory "T".

In other words, the motor means 2 make it possible to move the robot 1 inside the working area "A" in which it operates.

In particular, the motor means 2 comprise a frame 3 and movement elements 4.

The frame 3 may in turn comprise, for example, an upper body and a lower body, preferably associated with each other in a removable fashion. The upper body and the lower body may be made, for example, of plastic material.

The robot 1 also comprises movement means 3 mounted on the frame 3 for moving the frame 3 relative to a working area "A"; the latter may be a lawn, a garden, or in general any surface on which the robot 1 is called to operate.

The movement means 4 preferably comprise a plurality of wheels, which are mounted on the frame 3, and one or more motors, set up for rotating the wheels.

Preferably, the robot 1 is equipped with four wheels, suitably motor-driven. The robot 1 also comprises grass cutting means 5, for example one or more blades, which are associated with the motor means 2, in particular with the frame 3, for cutting the grass present in the working area "A".

Advantageously, the cutting means 5 are driven by suitable motors, housed in the motor means 2.

By way of example, the motors can be electric motors, powered by a battery; the latter may be of the rechargeable type.

By way of example, this description refers to a motor designed to move a cutting blade.

Preferably, the recharging of the robot 1, which occurs at a fixed station 1a or recharging base, is achieved by electrical coupling, in particular of the inductive type.

Preferably, the battery may also power other electrical/electronic devices provided on the lawn mower robot 1.

The robot 1 according to the invention also comprises an antenna 6 configured to receive wireless signals from at least one personal wireless device 7 which can be coupled to the antenna 6.

Preferably, the personal wireless device 7 is a device which uses the Bluetooth® communication standard.

In this particular situation, the wireless signals which can be received by the antenna 6 are consequently Bluetooth® signals.

In particular, the personal wireless device 7 can be associated with an obstacle which is mobile or potentially mobile, for example, an animal or a person.

The antenna 6 is thus configured to be placed in communication with one or more personal wireless devices 7 in such a way as to be able to collect from them information useful for the correct determination of the cutting trajectory "T" to be followed in order to guarantee the safety of the operation.

The robot 1 also comprises a control unit 8 configured for determining a relative distance of the at least one personal wireless device 7 relative to the robot 1 as a function of the wireless signals, in particular of their information content, received from the antenna 6 and for determining the cutting trajectory "T" and activating/deactivating the cutting means 5 as a function of the relative distance.

In this way, the control unit 8 is able to monitor the movements of the mobile obstacle inside the cutting area "A" by means of the wireless signals emitted by the personal wireless device 7 associated with the obstacle.

In other words, the control unit 8 is connected to the antenna 6 and is configured to process the wireless signals it receives from the at least one personal wireless device 7 in order to obtain information relating to the distance between the robot 1 and the personal wireless device 7.

As a function of this information, that is to say, as a function of the distance between the robot 1 and the personal wireless device 7, the control unit 8 manages the cutting operation, in particular regarding the cutting trajectory "T" and the activation status of the cutting means 5.

In this way, the control unit 8 is able to modify in use the cutting trajectory "T" in order to respond in a timely manner to any changes in the conditions in which the robot 1 operates, allowing it to react in an accurate and reliable manner if a mobile or potentially mobile obstacle, to which an personal wireless device 7 has been associated, is located within a certain distance from the robot 1.

Advantageously, the control unit 8 is able to control the cutting operation in such a way as to handle a multitude of possible different situations and respond to them in such a way as to find the best possible balance between efficiency and safety of the cutting operation.

In particular, the control unit 8 is configured for deactivating the cutting means 5 when the at least one personal wireless device 7 approaches the robot 1 reaching a relative distance less than a predetermined value, preferably the predetermined value being equal to a metre.

In other words, if the control unit 8 determines, by processing the wireless signals received from the antenna 6, that the personal wireless device 7 is moving towards the robot 1 up to the point wherein the relative distance is less than a preset and predetermined value, then the control unit 8 deactivates the cutting means 5 until the personal wireless device 7 remains at a relative distance less than the predetermined value.

It is also possible that it is not the personal wireless device 7 that approaches the robot 1, but that the opposite situation occurs, that is to say, it is the robot 1 which follows the trajectory "T" that moves it towards the personal wireless device 7.

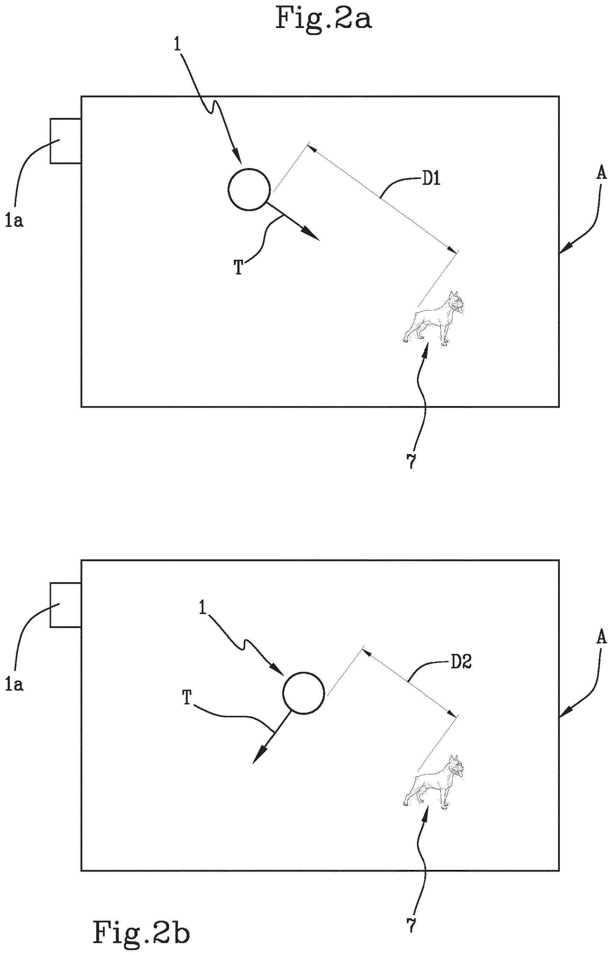

In the above-mentioned case, illustrated by way of example in Figures 2a, 2b, the control unit 8 is configured for modifying the cutting trajectory "T" when the robot 1 approaches the at least one personal wireless device 7 reaching a relative distance less than a predetermined threshold value, preferably the predetermined threshold value being equal to a metre.

In particular, in Figure 2a, the robot 1 is at a distance "D1", greater than the predetermined threshold value, from the personal wireless device 7 and is following a cutting trajectory "T" which moves it moves towards it.

In Figure 2b, on the other hand, the robot 1 is positioned, relative to the personal wireless device, at a distance "D2", less than the predetermined threshold value, so the control unit 8 makes a modification to the cutting trajectory "T".

If the change of trajectory "T" does not increase the relative distance, the control unit 8 is further configured for deactivating the cutting means 5 when the lawn mower robot approaches the at least one personal wireless device 7 reaching a relative distance less than a predetermined safety value, preferably the predetermined safety value being equal to a metre.

In other words, two possible situations are identified: the robot 1 moves towards the personal wireless device 7, or it is the personal wireless device 7 to move towards the robot 1.

In the first case, in view of the low speed of movement of this type of device, it is possible to provide a first value, or predetermined threshold value, below which it is sufficient for the robot 1 to modify its cutting trajectory "T" to be able to continue operating in complete safety without the risk of a collision between the robot 1 and the obstacle in question.

If, however, the relative distance continues to reduce, a second value is advantageously provided, or a predetermined safety value, below which, in any case, the cutting means 5 are deactivated.

In the second case, since it is impossible to foresee the speed of approach of the obstacle to which the personal wireless device 7 is associated and the speed can change over time, the control unit 8 immediately deactivates the cutting means 5 if the relative distance becomes less than the predetermined value.

Advantageously, the antenna 6 is further configured for transmitting a warning signal to the at least one personal wireless device 7 when the relative distance between the robot 1 and the at least one personal wireless device 7 becomes less than a predetermined response value.

Advantageously, the predetermined response value may be equal to the predetermined value and/or the predetermined threshold value.

In other words, the antenna 6 is able to generate and send to the at least one personal wireless device 7 a warning signal configured to notify the latter of an excessive approach to the robot 1.

The control unit 8 is also configured for determining a position of the at least one personal wireless device 7 and for storing a plurality of positioning data representing the position at successive moments in time. In other words, the control unit 8 is able to record the position of the personal wireless device 7 inside the operating area of the antenna 6.

Advantageously, the control unit 8 can be associated with a computing cloud configured to receive the positioning data from the control unit 8 in such a way as to enable any subsequent analysis.

Another object of the invention is a system for cutting a lawn with increased safety.

The system comprises a lawn mower robot 1 made in accordance with what is described above and at least one personal wireless device 7 configured for receiving and transmitting wireless signals from and to the antenna 6 of the robot 1.

In particular, the antenna 6 is configured for transmitting a warning signal to the at least one personal wireless device 7 when the relative distance between the robot 1 and the at least one personal wireless device 7 becomes less than a predetermined response value.

The warning signal is advantageously configured to activate a vibration of the at least one personal wireless device 7.

The wireless personal device 7 can be associated with a mobile or potentially mobile obstacle such as an animal or person and can adopt different shapes depending on the type of obstacle to which it is to be associated.

By way of a non-limiting example, the personal wireless device 7 may be one of either: a portable terminal, a mobile phone, a wearable wireless accessory.

If the obstacle is an animal it is particularly advantageous to integrate the personal wireless device 7 in a collar to be applied to the animal.

Advantageously, the invention achieves the preset aims, overcoming the drawbacks of the prior art, by providing the user with a lawn mower robot and a respective cutting system which guarantees the safety of animals and/or persons inside the cutting area "A".

## Claims

1. A system for controlling the trajectory and the execution of the grass cutting operations of a lawn mower robot
comprising an autonomous lawn mower robot (1) and at least one personal wireless device (7), wherein the lawn mower robot comprises:
- motor means (2) designed to allow the movement of the robot in a substantially automatic fashion along a cutting trajectory (T) inside a cutting area (A);
- grass cutting means (5);
- an antenna (6) configured to receive wireless signals from the at least one personal wireless device (7) which can be coupled with said antenna (6) and which is configured to receive and transmit wireless signals from and to the antenna of the robot;
- a control unit (8) configured for determining a relative distance (D) of the at least one personal wireless device (7) with respect to the robot as a function of the wireless signals received by the antenna (6) and for determining the cutting trajectory (T) and activating/deactivating the cutting means (5) as a function of said relative distance (D);
said antenna (6) being configured for transmitting a warning signal to the at least one personal wireless device (7) when the relative distance (D) between the robot and the at least one personal wireless device (7) becomes less than a predetermined response value;
**characterised in that**
said control unit (8) is configured for determining a position of the at least one personal wireless device (7) inside the cutting area (A) and for storing a plurality of positioning data representing said position at successive moments in time.

2. The system according to claim 1, wherein the control unit (8) is configured for deactivating the cutting means (5) when the at least one personal wireless device (7) approaches the robot reaching a relative distance (D) less than a predetermined value, preferably said predetermined value being equal to a metre.

3. The system according to claim 1, wherein the control unit (8) is configured for modifying the cutting trajectory (T) when the robot approaches the at least one personal wireless device (7) reaching a relative distance (D) less than a predetermined threshold value, preferably said predetermined threshold value being equal to two metres.

4. The system robot according to claim 3, wherein the control unit (8) is configured for deactivating the cutting means (5) when the robot approaches the at least one personal wireless device (7) reaching a relative distance (D) less than a predetermined safety value, preferably said predetermined safety value being equal to a metre.

5. The system according to any one of the preceding claims, wherein the wireless signals are Bluetooth signals®.

6. The system according to one or more of preceiding claims, wherein said control unit (8) can be associated with a computing cloud configured for receiving the positioning data from the control unit (8) and storing it in such a way as to enable any subsequent analysis.

7. The system according to claim 1, wherein said warning signal being designed to activate a vibration of the at least one personal wireless device (7).

8. The system according to claim 1 or 7, wherein said at least one personal wireless device (7) is at least one between: a portable terminal, a mobile phone, a wearable wireless accessory.

## Patentansprüche

1. System zum Steuern der Bahn und der Ausführung der Grasschneidevorgänge eines Rasenmähroboters, umfassend einen autonomen Rasenmähroboter (1) und mindestens ein persönliches drahtloses Gerät (7), wobei der Rasenmähroboter umfasst:
- Motormittel (2), die so ausgelegt sind, dass sie die Bewegung des Roboters im Wesentlichen automatisch entlang einer Schneidbahn (T) innerhalb eines Schneidbereichs (A) ermöglichen;
- Grasschneidmittel (5);
- eine Antenne (6), die zum Empfangen von Funksignalen von mindestens einem persönlichen Funkgerät (7) konfiguriert ist, die mit der Antenne (6) gekoppelt werden kann und die zum Empfangen und Senden von Funksignalen von und zur Antenne des Roboters konfiguriert ist;
- eine Steuereinheit (8), die zum Bestimmen eines relativen Abstands (D) des mindestens einen persönlichen drahtlosen Geräts (7) in Bezug auf den Roboter als Funktion der von der Antenne (6) empfangenen drahtlosen Signale und zum Bestimmen der Schneidbahn (T) und zum Aktivieren/Deaktivieren der Schneidmittel (5) als Funktion des relativen Abstands (D) konfiguriert ist; wobei die Antenne (6) zum Senden eines Warnsignals an das mindestens eine persönliche drahtlose Gerät (7) konfiguriert ist, wenn der relative Abstand (D) zwischen dem Roboter und dem mindestens einen persönlichen drahtlosen Gerät (7) kleiner als einen vorbestimmten Antwortwert wird;
**dadurch gekennzeichnet, dass** die Steuereinheit (8) konfiguriert ist, um eine Position des mindestens einen persönlichen drahtlosen Geräts (7) innerhalb des Schneidbereichs (A) zu bestimmen und um eine Vielzahl an Positionierungsdaten zu speichern, die die Position zu aufeinanderfolgenden Zeitpunkten darstellen.

2. System nach Anspruch 1, wobei die Steuereinheit (8) zum Deaktivieren der Schneidmittel (5) konfiguriert ist, wenn sich das mindestens eine persönliche drahtlose Gerät (7) dem Roboter nähert und einen relativen Abstand (D) erreicht, der kleiner als ein vorbestimmter Wert ist, vorzugsweise ist der vorbestimmte Wert gleich einem Meter.

3. System nach Anspruch 1, wobei die Steuereinheit (8) zum Modifizieren der Schneidbahn (T) konfiguriert ist, wenn sich der Roboter dem mindestens einen persönlichen drahtlosen Gerät (7) nähert und einen relativen Abstand (D) erreicht, der kleiner als ein vorbestimmter Schwellenwert ist, vorzugsweise ist der vorbestimmte Schwellenwert gleich zwei Metern.

4. System nach Anspruch 3, wobei die Steuereinheit (8) zum Deaktivieren der Schneidmittel (5) konfiguriert ist, wenn sich der Roboter dem mindestens einen persönlichen drahtlosen Gerät (7) nähert und einen relativen Abstand (D) erreicht, der kleiner als ein vorbestimmter Sicherheitswert ist, vorzugsweise ist der vorbestimmte Sicherheitswert gleich einem Meter.

5. System nach einem der vorhergehenden Ansprüche, wobei die Funksignale Bluetooth-Signale® sind.

6. System nach einem oder mehreren vorhergehenden Ansprüchen, wobei die Steuereinheit (8) mit einer Computing-Cloud assoziiert sein kann, die konfiguriert ist, um die Positionierungsdaten von der Steuereinheit (8) zu empfangen und so zu speichern, dass eine jede nachfolgende Analyse ermöglicht wird.

7. System nach Anspruch 1, wobei das Warnsignal so ausgelegt ist, dass es eine Vibration des mindestens einen persönlichen drahtlosen Geräts (7) aktiviert.

8. System nach Anspruch 1 oder 7, wobei es sich bei dem mindestens einen persönlichen drahtlosen Gerät (7) mindestens um eines zwischen: einem tragbaren Endgerät, einem Mobiltelefon, einem tragbaren drahtlosen Zubehör handelt.

## Revendications

1. Système servant à commander la trajectoire et l'exécution des opérations de coupe de l'herbe d'un robot pour tondre le gazon comprenant un robot pour tondre le gazon autonome (1) et au moins un dispositif sans fil personnel (7), dans lequel le robot pour tondre le gazon comprend :
- des moyens motorisés (2) conçus pour permettre le déplacement du robot de manière substantiellement automatique le long d'une trajectoire de coupe (T) à l'intérieur d'une zone de coupe (A) ;
- des moyens de coupe d'herbe (5) ;
- une antenne (6) configurée pour recevoir des signaux sans fil provenant de l'au moins un dispositif sans fil personnel (7) pouvant être couplé à ladite antenne (6) et étant configurée pour recevoir et transmettre des signaux sans fil depuis et vers l'antenne du robot ;
- une unité de commande (8) configurée pour déterminer une distance relative (D) de l'au moins un dispositif sans fil personnel (7) par rapport au robot en fonction des signaux sans fil reçus par l'antenne (6) et pour déterminer la trajectoire de coupe (T) et activer/désactiver les moyens de coupe (5) en fonction de ladite distance relative (D) ;
ladite antenne (6) étant configurée pour transmettre un signal d'avertissement à l'au moins un dispositif sans fil personnel (7) lorsque la distance relative (D) entre le robot et l'au moins un dispositif sans fil personnel (7) devient inférieure à une valeur de réponse prédéterminée ;
**caractérisé en ce que** ladite unité de commande (8) est configurée pour déterminer une position de l'au moins un dispositif sans fil personnel (7) à l'intérieur de la zone de coupe (A) et pour stocker une pluralité de données de positionnement représentant ladite position à des moments successifs dans le temps.

2. Système selon la revendication 1, dans lequel l'unité de commande (8) est configurée pour désactiver les moyens de coupe (5) lorsque l'au moins un dispositif sans fil personnel (7) s'approche du robot en atteignant une distance relative (D) inférieure à une valeur prédéterminée, de préférence ladite valeur prédéterminée étant égale à un mètre.

3. Système selon la revendication 1, dans lequel l'unité de commande (8) est configurée pour modifier la trajectoire de coupe (T) lorsque le robot s'approche de l'au moins un dispositif sans fil personnel (7) en atteignant une distance relative (D) inférieure à une valeur seuil prédéterminée, de préférence ladite valeur seuil prédéterminée étant égale à deux mètres.

4. Système selon la revendication 3, dans lequel l'unité de commande (8) est configurée pour désactiver les moyens de coupe (5) lorsque le robot s'approche de l'au moins un dispositif sans fil personnel (7) en atteignant une distance relative (D) inférieure à une valeur de sécurité prédéterminée, de préférence ladite valeur de sécurité prédéterminée étant égale à un mètre.

5. Système selon l'une quelconque des revendications précédentes, dans lequel les signaux sans fil sont des signaux Bluetooth®.

6. Système selon l'une ou plusieurs des revendications précédentes, dans lequel ladite unité de commande (8) peut être associée à une informatique en nuage configurée pour recevoir les données de positionnement de l'unité de commande (8) et les stocker de manière à permettre toute analyse ultérieure.

7. Système selon la revendication 1, dans lequel ledit signal d'alerte est conçu pour activer une vibration de l'au moins un dispositif sans fil personnel (7).

8. Système selon la revendication 1 ou 7, dans lequel ledit au moins un dispositif sans fil personnel (7) est au moins un parmi : un terminal portable, un téléphone mobile, un accessoire sans fil portable.
